Europäisches Patentamt

European Patent Office

Office européen des brevets

(11) Veröffentlichungsnummer: **0 204 095**
**B1**

(12) **EUROPÄISCHE PATENTSCHRIFT**

(45) Veröffentlichungstag der Patentschrift:
**12.07.89**

(21) Anmeldenummer: **86104437.8**

(22) Anmeldetag: **01.04.86**

(51) Int. Cl.⁴: **B23B 31/16**

(54) **Einrichtung zur Koppelung von Aufsatzspannbacken mit Grundbacken eines Spannfutters.**

(30) Priorität: **03.06.85 DE 3519785**

(43) Veröffentlichungstag der Anmeldung:
**10.12.86 Patentblatt 86/50**

(45) Bekanntmachung des Hinweises auf die Patenterteilung:
**12.07.89 Patentblatt 89/28**

(84) Benannte Vertragsstaaten:
**DE FR GB IT**

(56) Entgegenhaltungen:
**DE-A- 2 610 587**
**DE-A- 2 813 832**
**DE-A- 2 949 567**
**FR-A- 2 125 100**

(73) Patentinhaber: **SMW Schneider & Weisshaupt GmbH,
Wiesentalstrasse 28, D-7996 Meckenbeuren(DE)**

(72) Erfinder: **Hiestand, Karl, Mühlweg 2,
D-7798 Pfullendorf(DE)**

(74) Vertreter: **Engelhardt, Guido, Dipl.-Ing.,
Montafonstrasse 35 Postfach 1350,
D-7990 Friedrichshafen 1(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung bezieht sich auf eine Einrichtung zur Koppelung von Aufsatzspannbacken mit im Futterkörper eines Spannfutters verstellbar geführten Grundbacken, die durch eine Radialverschiebung mit den Aufsatzspannbacken formschlüssig verbindbar sind und jeweils einen in Achsrichtung des Futterkörpers abstehenden Ansatz aufweisen, an dem eine Anschlagfläche sowie ein achssenkrecht nach innen und/oder außen abstehender Vorsprung in Form einer Rastnase angebracht sind, und wobei in die im Futterkörper drehfest geführten Aufsatzspannbacken eine den Ansatz aufnehmende Aussparung eingearbeitet ist, die mit einer den Vorsprung des Ansatzes aufnehmenden Hinterschneidung und mit einer mit der Anschlagfläche des Ansatzes zusammenwirkenden Gegenfläche versehen ist, und wobei zur Arretierung der Aufsatzspannbacken jeden Grundbacken ein axial verschiebbares Riegelglied eingesetzt ist, das in einer in die Aufsatzbacken eingearbeiteten Ausnehmung einrastbar ist.

Ein Aufsatzspannbacken-Wechsel-System dieser Art ist durch die DE-OS 33 37 047 bekannt und hat sich in der Praxis auch bewährt. Die zur Arretierung der Aufsatzspannbacken in Koppelstellung hierbei vorgesehenen Riegelglieder sind als in dem Ansatz eines Grundbackens entgegen der Kraft einer Feder verschiebbar eingesetzter Rastbolzen ausgebildet, die in zugeordnete Ausnehmungen der Aufsatzspannbacken eingreifen. Mit Hilfe von durch diese Ausnehmungen zuführbaren in einer Palette gehaltenen Werkzeugen können bei einem Aufsatzspannbackenwechsel die Rastbolzen zwar zurückgedrückt und die Verriegelung somit in kurzer Zeit gelöst werden, als nachteilig hat sich jedoch erwiesen, daß die Aufsatzspannbacken somit eine nicht verschließbare Öffnung aufweisen müssen, in die Schmutz eindringen kann. Dies kann zu Betriebsstörungen führen, da die Anlage der Aufsatzspannbacken an den Grundbacken beeinträchtigt werden kann und die Rastbolzen, verursacht durch Späne oder andere Schmutzteile, mitunter hängenbleiben. Die Überwachung des jeweiligen Betriebszustandes ist daher bei dieser Ausgestaltung mit einem erheblichen Aufwand verbunden. Des weiteren sind über die Palette oder einem die Aufsatzspannbacken zuführenden Handlinggerät axiale Kräfte, um die auf die Rastbolzen einwirkenden Federn zurückzudrängen, zu übertragen, eine Forderung, die oftmals zusätzlichen Bauaufwand bedingt. Außerdem können die den Grundbacken oder den Aufsatzspannbacken zugeordneten Federn brechen, eine selbsttätige sichere Verrastung und damit eine Verriegelung der Aufsatzspannbacken ist dann nicht mehr gegeben, so daß in diesem Fall eine zuverlässige Einspannung eines Werkstückes nicht gewährleistet ist.

Aufgabe der Erfindung ist es daher, die Einrichtung der vorgenannten Gattung in der Weise zu verbessern, daß die Aufsatzspannbacken stets betriebssicher auf den Grundbacken gehalten sind und daß die Verriegelung zwischen diesen leicht herzustellen und gut zu überwachen ist. Vor allem soll es möglich sein, die Aufsatzspannbacken geschlossen auszubilden, so daß kein Schmutz zwischen diesen und die Grundbacken gelangen kann, und daß eine Verriegelung mittels Formschluß erfolgt, ohne daß Federkräfte mitwirken. Des weiteren soll es nicht erforderlich sein, über die die Aufsatzspannbacken zuführende Palette oder ein Handlinggerät axial gerichtete Kräfte aufzubringen.

Gemäß der Erfindung wird dies dadurch erreicht, daß zur Betätigung der Riegelglieder ein axial verschiebbar oder verdrehbar gelagertes Stellglied vorgesehen ist, das jeweils über ein Zwischenglied und/oder ein Umlenkglied mit den Riegelgliedern mechanisch zwangläufig verbunden ist.

Zweckmäßig ist es hierbei, das Stellglied als einen auf oder in dem Futterkörper angeordneten, in dessen Achsrichtung verschiebbaren oder gegenüber diesem verdrehbaren Schaltring oder als ähnliches Bauteil auszubilden, der unmittelbar, beispielsweise durch Sicherungsbolzen, Raststife, Kugelrasten oder dgl. oder mittels zugeordneter Betätigungsglieder in Eingriffstellung der Riegelglieder arretierbar ist.

Zur zwangläufigen Verbindung des Stellgliedes mit den Riegelgliedern kann in einfacher Ausgestaltung in den Grundbacken jeweils ein Zwischenglied und/oder ein Umlenkglied eingesetzt werden, mittels denen die Verstellbewegungen des Stellgliedes in axiale Vorschubbewegungen der Riegelglieder umsetzbar sind.

Die Umlenkglieder können in unterschiedlicher Weise ausgebildet werden. Nach einer vorteilhaften einfachen Ausgestaltung können diese jeweils aus einer vorzugsweise mittig angeordneten Ausnehmung der Grundbacken verschwenkbar gelagerte zweiarmige Hebel bestehen, die mit einem Ende mit einem verschiebbaren Zwischenglied oder unmittelbar mit dem axial verstellbaren Stellglied und mit dem anderen Ende mit den Riegelgliedern gelenkig verbunden sind, es ist aber auch möglich, die Umlenkglieder als drehbar in den Grundbacken gelagerte Bolzen auszubilden, die mit einer in deren äußeren oder inneren Bereich angebrachten Verzahnung, einem Hebel oder einem Nocken mit in den Grundbacken axial verschiebbar eingesetzten und mit dem Stellglied gekoppelten Zwischengliedern oder unmittelbar mit diesem zwangläufig verbunden sind und in ihrem inneren oder äußeren Bereich über eine weitere Verzahnung einen Hebel oder einen Nocken mit den Riegelgliedern in Verbindung stehen.

Nach einer andersartigen Ausführungsform sind die Umlenkglieder als in die Grundbacken radial verschiebbar eingesetzte Verstellbolzen ausgebildet, die mittels an diesen, vorzugsweise an deren äußeren und inneren Stirnflächen angearbeiteten Schrägflächen mit an den Zwischengliedern und den Riegelgliedern vorgesehenen Gegenflächen mit diesen zwangläufig verbunden sind. Hierbei ist es angebracht, die zusammenwirkenden Schrägflächen der Zwischenglieder, der Verstellbolzen und der Riegelglieder als ineinandergreifende Keilhaken zu gestalten.

Eine besonders einfache Bauweise der Einrichtung ist gegeben, wenn die Zwischenglieder auf der den Grundbacken zugekehrten Seite jeweils als Riegelglieder ausgebildet sind, die in eine in die Aufsatzspannbacken eingearbeitete Ausnehmung einrastbar sind. Umlenkglieder entfallen nämlich bei dieser Ausführungsform.

Zur Koppelung der Zwischenglieder mit dem Verstellglied ist es angebracht, an diesem, vorzugsweise mittig zu den Grundbacken, Betätigungsbolzen zu befestigen, mit denen die Zwischenglieder zum Ausgleich der Verstellbewegungen der Grundbacken eine radial verstellbare Nut-Feder-Verbindung z. B. nach Art einer Hammerkopf-Verbindung zwangläufig gekoppelt sind.

Zur Betätigung einzelner Riegelglieder des Spannfutters kann das Stellglied als kippbar gelagerter Ring ausgebildet und über an den Betätigungsbolzen oder den Zwischengliedern angearbeitete konvex gekrümmte Flächen an diesen abgestützt werden.

Nach einer weiteren Ausgestaltung können die Umlenkglieder auch als drehbar in den Grundbacken gelagerte Bolzen ausgebildet werden, die mit angebrachten Hebeln, Verzahnungen oder Nocken mit dem verdrehbaren Stellglied und mit den Riegelgliedern zwangläufig verbunden sind.

Die gemäß der Erfindung ausgebildete Einrichtung zur Koppelung von Aufsatzspannbacken mit im Futterkörper eines Spannfutters verstellbar geführten Grundbacken ist nicht nur je nach Ausführungsform einfach in der konstruktiven Ausgestaltung und leicht zu handhaben, sondern gewährleistet vor allem eine stets zuverlässige betriebssichere Verriegelung der Aufsatzspannbacken. Und da die Verriegelung durch Formschluß erfolgt, sind die einzelnen Betriebszustände ohne Schwierigkeiten und ohne großen Bauaufwand zu überwachen. Wird nämlich zur Betätigung der Riegelglieder ein axial verschiebbares oder verdrehbares Stellglied vorgesehen, das über Zwischen- und/oder Umlenkglieder mit den Riegelgliedern verbunden ist, ist eine zwangläufige mechanische Verbindung geschaffen, die äußerst störunempfindlich ist und somit eine hohe Betriebssicherheit auch unter erschwerten Betriebsbedingungen ergibt. Federn zum Einrücken der Riegelglieder sind nicht mehr erforderlich, auch sind über die Paletten keine axial gerichteten Kräfte zum Lösen der Verriegelung zu übertragen. Des weiteren können die Aufsatzspannbacken geschlossen ausgebildet werden, bei den auf den Grundbacken aufgesetzten Aufsatzspannbacken kann demnach kein Schmutz zwischen diese und in die Führungen der Riegelglieder gelangen. Dadurch bedingte Betriebsstörungen sind demnach ebenfalls ausgeschlossen. Und da alle Riegelgieder durch ein gemeinsames Stellglied betätigt werden, ist die Überwachung, insbesondere ob die Riegelglieder sich in Koppelstellung befinden und die Aufsatzspannbacken somit verriegelt sind, auf einfache Art und Weise über die Lage des Stellgliedes problemlos zu bewerkstelligen.

In der Zeichnung sind einige Ausführungsbeispiele der gemäß der Erfindung ausgebildeten Einrichtung zur Koppelung von Aufsatzspannbacken mit im Futterkörper eines Spannfutters verstellbar geführten Grundbacken dargestellt, die nachfolgend im einzelnen erläutert sind. Hierbei zeigt:

Fig. 1 ein Kraftspannfutter mit radial verschiebbaren Grundbacken, an denen Aufsatzspannbacken angekoppelt sind, mit mechanischer Betätigung der Riegelglieder und einem verschwenkbaren Hebel als Umlenkglied, im Axialschnitt,

Fig. 2 eine andersartige Anordnung des Umlenkgliedes bei dem Kraftspannfutter nach Fig. 1,

Fig. 3 das Kraftspannfutter nach Fig. 1 mit einem verdrehbaren Bolzen als Umlenkglied, im Axialschnitt,

Fig. 4 einen Schnitt nach der Linie IV - IV der Fig. 3,

Fig. 5 eine andersartige Ausgestaltung des Kraftspannfutters nach den Fig. 3 und 4, im Axialschnitt,

Fig. 6 das Kraftspannfutter nach Fig. 1 mit einem radial verschiebbaren Verstellbolzen als Umlenkglied, im Axialschnitt,

Fig. 7 das Kraftspannfutter nach Fig. 1 mit als Riegelglied ausgebildetem Zwischenglied, im Axialschnitt,

Fig. 8 einen kippbar gelagerten Schaltring als Stellglied zur Einzelbetätigung von Zwischengliedern bei dem Kraftspannfutter nach Fig. 7,

Fig. 9 das Kraftspannfutter nach Fig. 1 mit einem verdrehbar angeordneten Stellglied, im Axialschnitt und

Fig. 10 das Kraftspannfutter nach Fig. 9 in einem Schnitt nach der Linie X - X der Fig. 9.

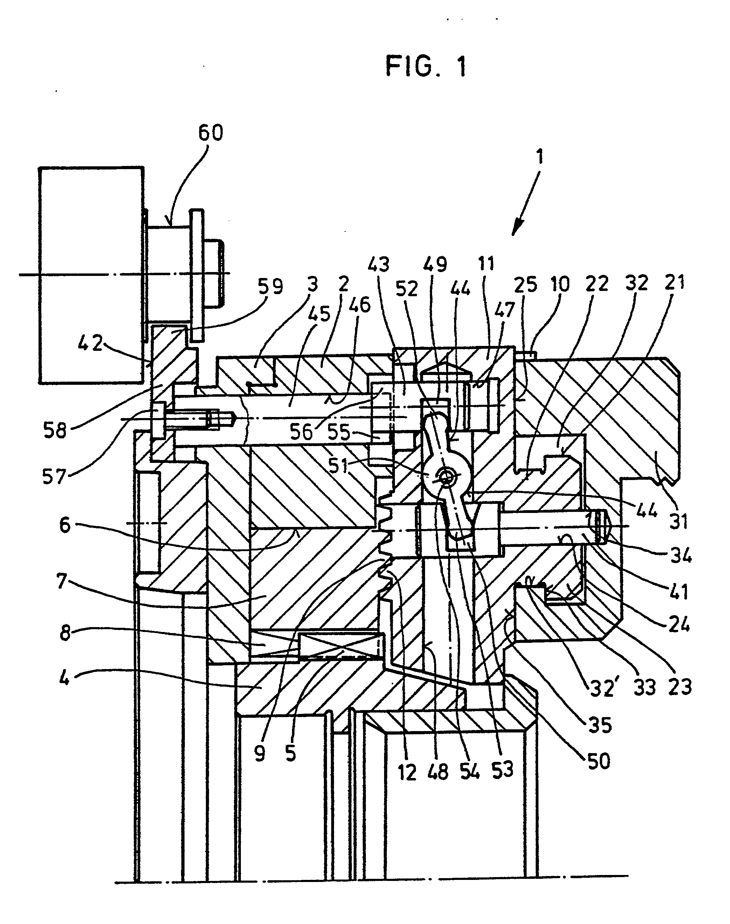

Das in Fig. 1 dargestellte und mit 1 bezeichnete kraftbetätigte Spannfutter weist mehrere, vorzugsweise drei gleichmäßig über den Umfang des Futterkörpers 2 in radial gerichteten Nuten 10 verschiebbar geführte Grundbacken 11 auf, die von einem zentralen Verstellkolben 4 über Keilstangen 7 antreibbar sind. Dazu sind die in tangential gerichteten Ausnehmungen 6 des Futterkörpers 2, die durch einen Deckel 3 verschlossen sind, eingesetzten Keilstangen 7 jeweils mit einer Keilnut 8, in die der Verstellkolben 4 mit angeformten Nasen 5 eingreift, sowie mit einer Verzahnung 9, mit der eine an den Grundbacken 11 angearbeitete Verzahnung 12 in Eingriff ist, versehen. Auf diese Weise wird, da die Keilnuten 8 und die in diese eingreifenden Nasen in Achsrichtung geneigt sind, eine Axialverschiebung des Verstellkolbens 5 in eine Radialbewegung der Grundbacken 11 umgelenkt.

Auf die Grundbacken 11 ist jeweils ein Aufsatzspannbacken 31 aufgesetzt, die lösbar mit diesem verbunden sind. Dazu dient ein an dem Grundbacken 11 angearbeiteter Ansatz 21, der in eine in dem Aufsatzspannbacken 31 vorgesehenen Aussparung 32 eingreift und mit diesem verrastbar ist. Der Ansatz 21 ist aus einem Bolzen 22 mit kreisförmigem Querschnitt gebildet, an dessen freiem Ende ein in Form eines Bundes 23 ausgebildeter Vorsprung angeformt ist. Auch die Aussparung 32 ist rotationssymmetrisch und im Durchmesser größer bemessen als der Bund 23, so daß der Ansatz 21 leicht in die Aussparung 32 eingeführt werden kann.

Zur Koppelung des an dem Grundbacken 11 angebrachten Ansatzes 21 mit dem Aufsatzspannbacken

31 ist die in diesen eingearbeitete Aussparung 32 mit einer Hinterschneidung 33 versehen, in die der Bund 23 des Ansatzes 21 eingreift und die durch eine kreisförmige Eindrehung gebildet ist. Auf diese Weise stützt sich in Koppelstellung der Bund 23 des Ansatzes 21 an dem Aufsatzspannbacken 31 ab, so daß eine große achssenkrechte Abstützfläche geschaffen ist. Die Arretierung in radialer Richtung ist durch Anlage des Bolzens 22 an der vor der Hinterschneidung 33 liegenden Wandung 32' der Aussparung 32 gegeben. Außerdem ist der Aufsatzspannbacken 31 seitlich geführt und dadurch drehfest gehalten.

Zur Koppelung des Aufsatzspannbackens 31 mit dem Grundbacken 11 ist lediglich der Aufsatzspannbacken 31 in Achsrichtung des Spannfutters 1 derart zu bewegen, daß der an dem Grundbacken 11 angeformte Ansatz 21 in die Aussparung 32 eingeführt wird und die Anlageflächen 35 der Aufsatzspannbacken 31 an der Anlagefläche 25 der Grundbacke 11 abgestützt ist. Sodann ist einer der Backen, zweckmäßigerweise der Grundbacken 11, radial bis zur Anlage des Bolzens 22 zu verschieben.

Da sich die Abstützfläche der Hinterschneidung 32 auch in radialer Richtung erstreckt und der Aufsatzspannbacken 11 mit seiner dem Grundbacken 11 zugekehrten Stirnfläche an diesem abgestützt ist, können ohne Schwierigkeiten auch sehr hohe Kräfte übertragen werden. Außerdem ist durch Verdrehen der Aufsatzspannbacken 31 um 180° leicht eine Umstellung von einer Außenspannung auf eine Innenspannung, und zwar ohne daß bauliche Veränderungen oder sonstige Maßnahmen zu treffen sind, vorzunehmen.

Um die Aufsatzspannbacken 31 betriebssicher mit den Grundbacken 11 in Koppelstellung zu arretieren, ist in einer zentrisch zu dem Ansatz 21 angeordneten Bohrung 24 jeweils ein Riegelglied eingesetzt, das in eine in die Aufsatzspannbacke 31 eingearbeitete sacklochartige Ausnehmung 34 einführbar ist. Bei Eingriff der in unterschiedlicher Weise mittels Stellglieder zu betätigenden Riegelglieder in die Ausnehmungen 34 der Aufsatzspannbacken 31 sind diese unverschiebbar mit den Grundbacken 11 verbunden.

Bei der Ausgestaltung nach Fig. 1 ist zur Axialverschiebung der Riegelglieder 41 ein ebenfalls axial verschiebbares auf dem Deckel 3 des Kraftspannfutters 1 angeordnetes Stellglied 42 vorgesehen, das über Zwischenglieder 43 und Umlenkglieder 44 auf die Riegelglieder 41 einwirkt. Die Umlenkglieder 44 sind hierbei als in einer radial gerichteten Bohrung 48 der Grundbacken 11 auf einem Bolzen 54 verschwenkbar gelagerte Hebel 51 ausgebildet, die mit einem Ende 52 in eine Ausnehmung 49 des Zwischengliedes 43 und mit dem anderen Ende 53 in eine Ausnehmung 50 des Riegelgliedes 41 eingreifen. Die Axialbewegung des im äußeren Bereich des Kraftspannfutters 1 angeordneten Stellgliedes 42 wird somit auf die radial innen liegenden Riegelglieder 41 übertragen.

Zur zwangläufigen Verbindung der Zwischenglieder 43 mit dem Stellglied 43 sind in Bohrungen 46 des Futterkörpers 2 verschiebbar angeordnete Betätigungsbolzen 45 vorgesehen, die mittels Schrauben 57 an diesem befestigt sind. Und mittels einem an dem anderen Ende der Betätigungsbolzen 45 angearbeiteten Hammerkopf 55, der in eine entsprechende Nut 56 der in einer Bohrung 47 der Grundbacken 11 verschiebbar geführten Zwischenglieder 43 eingreift, ist eine Verbindung geschaffen, mittels der die radiale Bewegung der Grundbacken 11 auszugleichen ist.

Das Stellglied 42 ist bei dem Ausführungsbeispiel nach Fig. 1 als Schaltring 58 mit angeformtem Ansatz 59 ausgebildet, in den eine Servoeinrichtung 60, beispielsweise in Form zweier diametral einander gegenüberliegend angeordneter Druckmittelzylinder eingreift. Bei einer Verschiebung des Kolbens der Servoeinrichtung 60 nach rechts wird das Stellglied 42 mitgenommen und dessen Verstellbewegung über die Betätigungsbolzen 45, die Zwischenglieder 43 sowie die Umlenkhebel 44 derart auf die Riegelglieder 41 übertragen, daß diese nach links verschoben und somit aus der Bohrung 34 herausgezogen werden. Die Verriegelung der Aufsatzspannbacken 31 ist demnach gelöst, so daß diese durch eine Radialbewegung z. B. der Grundbacken 11 von diesen abgenommen werden können können. Mittels der Servoeinrichtung 60 sind die Riegelglieder 41 in Koppelstellung auch auf einfache Weise zu sichern.

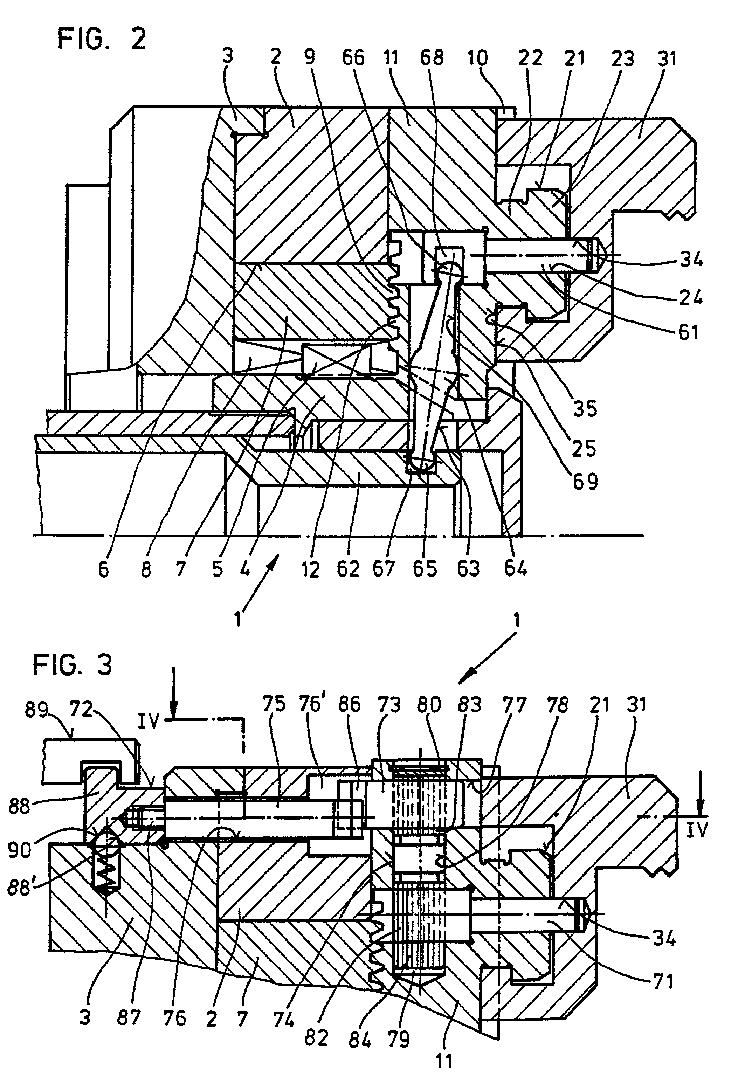

Bei der Ausgestaltung nach Fig. 2 sind zur Übertragung der Verstellbewegungen eines innerhalb des Kraftspannfutters 1 angeordneten Verstellgliedes 62 auf die Riegelglieder 61 Umlenkhebel 63 vorgesehen, die unmittelbar mit dem Stellglied 62 gekoppelt und ebenfalls als Hebel 64 ausgebildet sind. Mit einem Ende 65 greifen die in Freisparungen 69 der Grundbacken 11 eingesetzten Hebel 64 hierbei in in das Stellglied 62 eingearbeitete Ausnehmungen 68 ein, mit dem anderen Ende 66 in Ausnehmungen 68 der Riegelglieder 61. Zwischenglieder sind bei dieser Ausgestaltung somit nicht erforderlich.

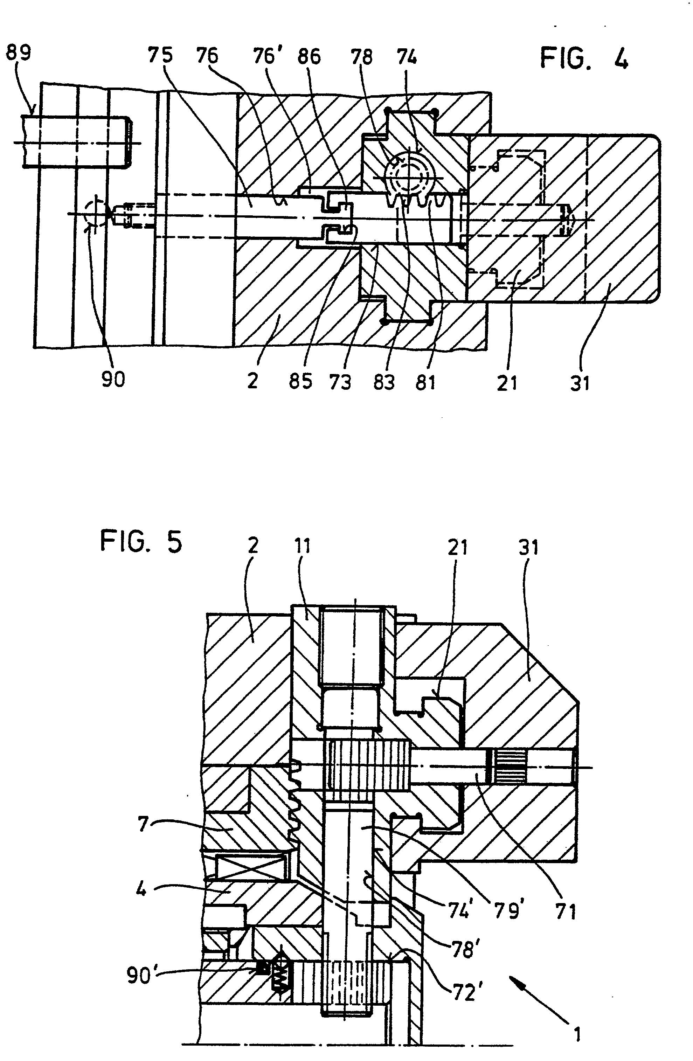

Bei den Ausführungsformen nach den Fig. 3, 4 und 5 dienen zur Übertragung der Verstellbewegungen des Stellgliedes 72 bzw. 72' auf die Riegelglieder 71 in Bohrungen 78 bzw. 78' der Grundbacken 11 verdrehbar eingesetzte Bolzen 79 bzw. 79' als Umlenkglieder 74 bzw. 74'. Nach den Fig. 3 und 4 sind in Bohrungen 77 der Grundbacken 11 axial verschiebbare Zwischenglieder 73 vorgesehen, nach Fig. 5 werden die Bolzen 79' unmittelbar von dem Verstellglied 72' betätigt.

Die durch Sprengringe 80 in den Bohrungen 78 gesicherten Bolzen 79 wie auch die Bolzen 79' sind mit Verzahnungen 83 und 84 ausgestattet, die in an den Zwischengliedern 73 und den Riegelgliedern 71 angearbeitete Gegenverzahnungen 81 bzw. 82 zusammenwirken. Die durch einen Stellzylinder 89 ausgelöste Verstellbewegung des als Schaltring 88 ausgebildeten Stellgliedes 72 wird somit über die in Bohrungen 76 des Futterkörpers 2 geführten und mittels eines Ansatzes 87 mit dem Stellglied 72 fest verbundenen Betätigungsbolzen 75 auf die in Bohrungen 76 der Grundbacken 11 geführten Zwischenglieder 73 und von diesen mittels der verdrehbaren Umlenkglieder 74 auf die Riegelglieder 71 übertragen. In Eingriffsstellung sind die Riegelglieder 71 mittels einer Federraste 90, die in eine in den Schaltring 88 eingearbeitete Ausnehmung 88' einrastet, gesichert. Um auch bei einer Radialverschiebung der Grundbacken 11 die zwangläufige Verbindung zwischen den Betätigungsbolzen 75 und den Zwischengliedern 73 aufrechzuerhalten, sind in diese Nuten 85 eingearbeitet und die Betätigungsbolzen 75 sind mit einem Hammerkopf 86 versehen, so daß eine Radialverschiebung der Zwischenglieder 73 in der Freisparung 76' möglich ist.

Die an dem verschiebbare Hülse ausgebildeten Stellglied 72' vorgesehenen mit dem Bolzen 79' zusammenwirkenden Verzahnungen sind in die Seitenwände von Längsschlitzen eingearbeitet. Des weiteren ist das Stellglied 72' mittels einer Federraste 90' arretierbar.

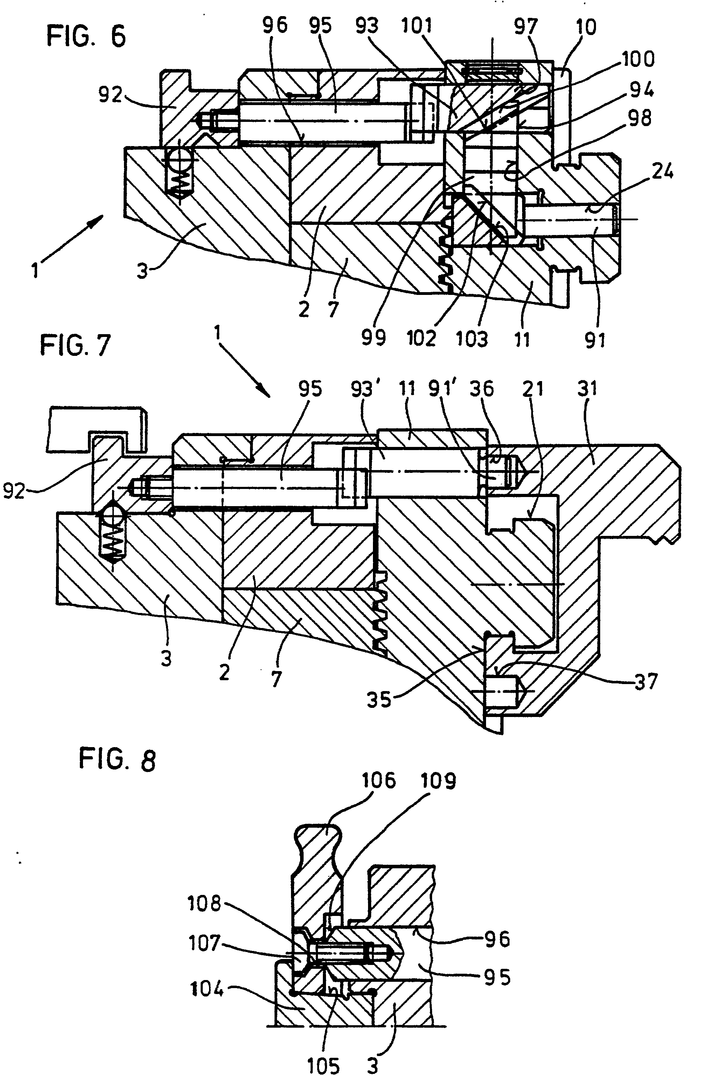

Bei der Ausgestaltung nach Fig. 6 sind als Umlenkglieder 94 jeweils ein in einer radial gerichteten Bohrung 98 der Grundbacken 11 eingesetzter Verstellbolzen 99 vorgesehen, an dessen Stirnflächen keilhakenförmig ausgebildete Schrägflächen 101 und 102 angearbeitet sind, die zur Übertragung der axialen Verstellbewegung des Stellgliedes 92 auf die Riegelglieder 91 mit an diesen und einem Zwischenglied 93 vorgesehenen Gegenflächen 103 bzw. 100 zusammenwirken. Bei einer Verstellbewegung des Verstellgliedes 92 nach links wird diese Bewegung über in Bohrungen 96 des Futterkörpers 2 eingesetzte Betätigungsbolzen 95 auf die in Bohrungen 97 der Grundbacken 11 angeordneten Zwischenglieder 93 übertragen und mittels der mit diesen zwangläufig gekoppelten Umlenkglieder 94 umgelenkt, so daß die in den Bohrungen 24 geführten Riegelglieder 91 nach rechts verschoben werden und somit in in den Aufsatzspannbacken 31 vorgesehenen Ausnehmungen 34 eingreifen können.

Gemäß Fig. 7 sind an den Zwischengliedern 93' die Riegelglieder 91' unmittelbar angeformt. Die beispielsweise bei der Ausgestaltung nach Fig. 6 vorgesehenen Umlenkglieder sind somit entfallen, die als abgesetzte Bolzen an den freien Enden der Zwischenglieder 93' angearbeiteten Riegelglieder 91' greifen hierbei in Ausnehmungen 36 oder 37 ein, die in die Anlagefläche 35 der Aufsatzspannbacke 31 eingearbeitet sind.

Bei den Ausführungsformen nach den Fig. 1 bis 7 werden die Riegelglieder mittels Stellglieder gemeinsam betätigt. Um aber auch eine Einzelbetätigung vornehmen zu können, damit beispielsweise von Hand die Aufsatzspannbacken eines Spannfutters nacheinander auszutauschen sind, kann, wie dies in Fig. 8 dargestellt ist, an dem Deckel 3 oder dem Futterkörper 2 des Spannfutters 1 ein Flansch 104 angebracht werden, auf dem ein Schaltring 106 kippbar gelagert ist. Dazu ist der Flansch 104 mit einer konvex gekrümmten Fläche 105 versehen, des weiteren sind die Stirnflächen 109 der Betätigungsbolzen 95 ebenfalls gekrümmt und diese sind mittels Schrauben 107, die mit Spiel eine Bohrung 108 durchgreifen, an dem Schaltring 106 befestigt.

Wird der Schaltring 106 gekippt, so wird nur einer der um 120° versetzt gegeneinander angeordneten Betätigungsbolzen 95 mitgenommen, so daß auch nur eine Verriegelung gelöst wird und die Aufsatzspannbacken nacheinander zu wechseln sind.

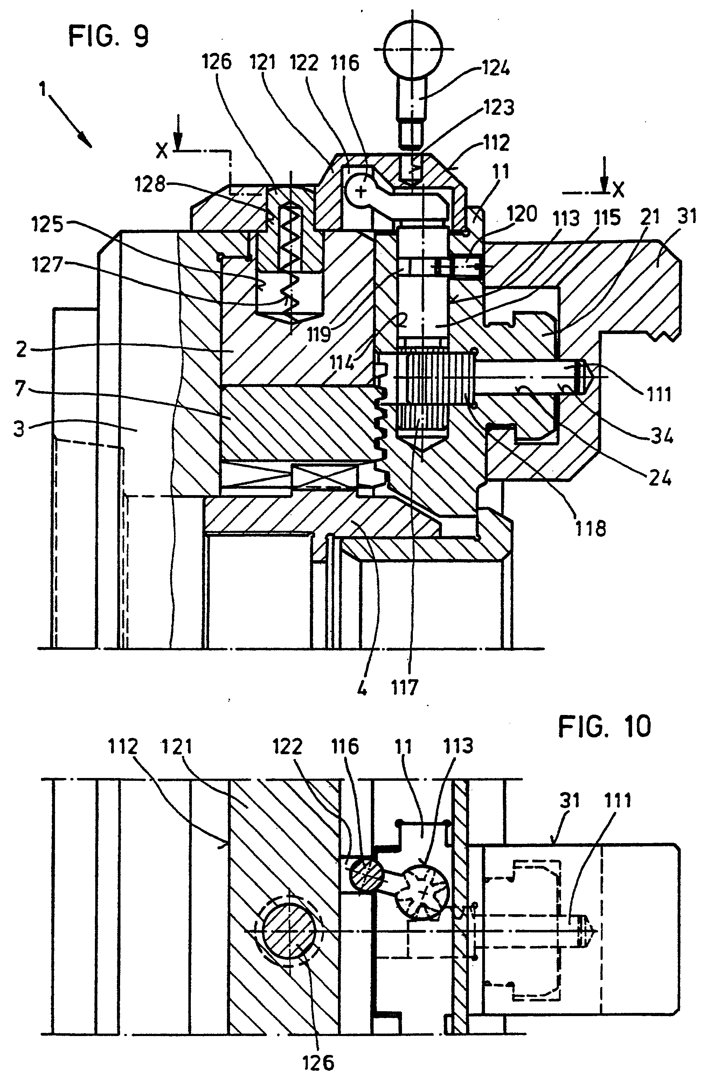

Gemäß den Fig. 9 und 10 ist als Stellglied 112 ein verdrehbar auf dem Futterkörper 2 des Kraftspannfutters 1 gelagerter Ring vorgesehen, der über ebenfalls verdrehbare Umlenkglieder 113 mit den Riegelgliedern 111 zwangläufig gekoppelt ist. Dazu sind in radial gerichteten Bohrungen 114 der Grundbacken 11 mittels in Nuten 119 eingreifender Stifte 120 gegen eine Radialverschiebung gesicherte Bolzen 115 geingesetzt, die mittels eines abstehenden in eine Ausnehmung 122 des Stellgliedes 112 eingreifenden Hebels 116 mit diesem und über ineinandergreifende Verzahnungen 117 und 118 mit den Riegelgliedern 111 in Triebverbindung stehen. Bei einer Verdrehbewegung des als Schaltring 121 ausgebildeten Stellgliedes 112, die von Hand beispielsweise mittels eines in eine Ausnehmung 123 einführbaren Schlüssels 124 oder durch eine Servoeinrichtung vorgenommen werden kann, wird dessen Verstellbewegung auf die Bolzen 115 und von diesen auf die Riegelglieder 111 übertragen, so daß diese aus der Bohrung 34 zurückgezogen werden und somit die Verriegelung der Aufsatzspannbacken 31 gelöst ist.

Bei aufgerasteten Aufsatzspannbacken 31 ist der Eingriff der Riegelglieder 111 in den Bohrungen 34 gesichert. Dazu dient ein Rastbolzen 126, der in eine Ausnehmung 125 des Futterkörpers 2 eingesetzt ist und durch die Kraft einer Feder 127 in eine in den Schaltring 121 eingearbeitete Ausnehmung 128 gedrückt wird. Ohne einen zusätzlichen Vorgang, in dem der Rastbolzen 126 niedergedrückt wird, kann somit das Stellglied 112 nicht verdreht und demnach die Verriegelung zwischen den Aufsatzspannbacken 21 und den Grundbacken 11 mittels der Riegelglieder 111 nicht gelöst werden.

## Patentansprüche

1. Einrichtung zur Koppelung von Aufsatzspannbacken (31) mit im Futterkörper eines Spannfutters (1) verstellbar geführten Grundbacken (11), die durch eine Radialverschiebung mit den Aufsatzspannbacken formschlüssig verbindbar sind und jeweils einen in Achsrichtung des Futterkörpers abstehenden Ansatz (21) aufweisen, an dem eine Anschlagfläche sowie ein achssenkrecht nach innen und/oder außen abstehender Vorsprung in Form einer Rastnase angebracht sind, und wobei in die im Futterkörper drehfest geführten Aufsatzspannbacken eine den Ansatz aufnehmende Aussparung (32) eingearbeitet ist, die mit einer den Vorsprung des Ansatzes aufnehmenden Hinterschneidung (33) und mit einer mit der Anschlagfläche des Ansatzes zusammenwirkenden Gegenfläche versehen ist, und wobei zur Arretierung der Aufsatzspannbacken in jeden Grundbacken ein axial verschiebbares Riegelglied (41, 61, 71, 91, 111) eingesetzt ist, das in einer in die Aufsatzbacken eingearbeiteten Ausnehmung einrastbar ist,
**dadurch gekennzeichnet,**
daß zur Betätigung der Riegelglieder (41; 61; 71; 91; 111) ein axial verschiebbar oder verdrehbar gelagertes Stellglied (42; 62; 72; 92; 112) vorgesehen ist, das jeweils über ein Zwischenglied (43; 73; 93;) und/oder über ein Umlenkglied (44; 63;74; 94; 113)

mit den Riegelgliedern (41; 61; 71; 91; 111) mechanisch zwangläufig verbunden ist.

2. Einrichtung nach Anspruch 1,
**dadurch gekennzeichnet,**
daß das Stellglied (42; 62; 72; 92; 112) als ein auf oder in dem Futterkörper (2) angeordneter, in dessen Achsrichtung verschiebbarer oder gegenüber diesem verdrehbarer Schaltring (58; 88; 122) oder als ähnliches Bauteil ausgebildet ist, der unmittelbar, beispielsweise durch Sicherungsbolzen (126), Raststifte, Kugelrasten (90, 90') od.dgl. oder mittels zugeordneter Betätigungsglieder (60) in Eingriffstellung der Riegelglieder (41; 61; 71; 91; 111) arretierbar ist.

3. Einrichtung nach Anspruch 1 oder 2,
**dadurch gekennzeichnet,**
daß zur zwangläufigen Verbindung des Stellgliedes (42; 62; 72; 92; 112) mit den Riegelgliedern (41; 61; 71; 91; 111) in den Grundbacken (11) jeweils ein Zwischenglied (43; 73; 93) und/oder ein Umlenkglied (44; 63; 73; 94; 113) eingesetzt sind, mittels denen die Verstellbewegungen des Stellgliedes (42; 62; 72; 92; 112) in axiale Vorschubbewegungen der Riegelglieder (41; 61; 71; 91, 111) umsetzbar sind.

4. Einrichtung nach Anspruch 3,
**dadurch gekennzeichnet,**
daß die Umlenkglieder (44; 63) jeweils als in einer vorzugsweise mittig angeordneten Ausnehmung (48; 49) der Grundbacken (11) verschwenkbar gelagerte zweiarmige Hebel (51; 64) ausgebildet sind, die mit einem Ende (52; 45) mit einem verschiebbaren Zwischenglied (43) oder unmittelbar mit dem axial verstellbaren Stellglied (42; 62) und mit dem anderen Ende (53; 46) mit den Riegelgliedern (41; 61) gelenkig verbunden sind.

5. Einrichtung nach Anspruch 3,
**dadurch gekennzeichnet,**
daß die Umlenkglieder (44; 74') als drehbar in den Grundbacken (11) gelagerte Bolzen (79, 79') ausgebildet sind, die mit einer in deren äußeren oder inneren Bereich angebrachten Verzahnung (83), einem Hebel oder einem Nocken mit in den Grundbacken (11) axial verschiebbar eingesetzten und mit dem Stellglied (72, 72') gekoppelten Zwischengliedern (73) oder unmittelbar mit diesem zwangläufig verbunden sind und in ihrem inneren und äußeren Bereich über eine weitere Verzahnung, (84) einen Hebel oder einen Nocken mit den Riegelgliedern (71) in Verbindung stehen.

6. Einrichtung nach Anspruch 3,
**dadurch gekennzeichnet,**
daß die Umlenkglieder (94) als in die Grundbacken (11) radial verschiebbar eingesetzte Verstellbolzen (99) ausgebildet sind, die mittels an diesen, vorzugsweise an deren äußeren und inneren Stirnflächen angearbeiteten Schrägflächen (101, 102) mit an den Zwischengliedern (93) und den Riegelgliedern (91) vorgesehenen Gegenflächen (101, 103) mit diesen zwangläufig verbunden sind.

7. Einrichtung nach Anspruch 6,
**dadurch gekennzeichnet,**
daß die zusammenwirkenden Schrägflächen (100, 101, 102, 103) der Zwischenglieder (93), der Verstellbolzen (99) und der Riegelglieder (91) als ineinandergreifende Keilhaken ausgebildet sind.

8. Einrichtung nach einem oder mehreren der Ansprüche 1 bis 3,
**dadurch gekennzeichnet,**
daß die Zwischenglieder (93') auf der den Grundbacken (11) zugekehrten Seite jeweils als Riegelglieder (91') ausgebildet sind, die in eine die Aufsatzspannbacken (31) eingearbeitete Ausnehmung (36 oder 37) einrastbar sind.

9. Einrichtung nach einem oder mehreren der Ansprüche 1 bis 8,
**dadurch gekennzeichnet,**
daß zur Koppelung der Zwischenglieder (43; 73; 93) mit dem Verstellglied (42; 72; 93) an diesem, vorzugsweise mittig zu den Grundbacken (11), Betätigungsbolzen (45; 75; 95) angebracht sind, mit denen die Zwischenglieder (43; 73; 93) über eine radial verstellbare Nut-Feder-Verbindung (55, 56; 85; 86) z.B. nach Art einer Hammer-Kopf-Verbindung zwangläufig gekoppelt sind.

10. Einrichtung nach einem oder mehreren der Ansprüche 1 bis 10,
**dadurch gekennzeichnet,**
daß zur Betätigung einzelner Riegelglieder des Spannfutters (1) das Stellglied (72') als kippbar gelagerter Ring (106) ausgebildet und über an den Betätigungsbolzen (95) oder den Zwischengliedern angearbeitete konvex gekrümmte Flächen (109) an diesen abgestützt ist.

11. Einrichtung nach Anspruch 3,
**dadurch gekennzeichnet,**
daß die Umlenkglieder (113) als drehbar in den Grundbacken (11) gelagerte Bolzen (116) ausgebildet sind, die mit angebrachten Hebeln (116), Verzahnungen (117) oder Nocken mit dem verdrehbaren Stellglied (112) und mit den Riegelgliedern (111) zwangläufig verbunden sind.

**Revendications**

1. Dispositif d'accouplement pour mors auxiliaires (31) à des mors (11) mobiles d'un corps de mandrin (1) dans lequel:
– les mors (11), solidarisables avec les mors auxiliaires par translation radiale, présentent chacun dans l'axe du corps de mandrin un tenon (21) comprenant une surface de butée ainsi qu'une partie en saillie perpendiculaire à l'axe tournée vers l'intérieur et/ou l'extérieur en forme de nez de butée;
– les mors auxiliaires guidés sans possibilité de rotation dans le corps de mandrin comportent, pour le logement du tenon, d'une part, un évidement (32) pourvu d'une contre-dépouille (33) destinée à recevoir la partie en saillie du tenon et d'autre part, une surface agissant avec la surface de butée du tenon;
– chaque mors comporte, pour le blocage des mors auxiliaires, un verrou (41, 61, 71, 91, 111) translatable axialement, venant s'engager dans un évidement pratiqué dans les mors auxiliaires, caractérisé en ce que, les verrous (41, 61, 71, 91, 111) sont actionnés par un organe de commande (42, 62, 72, 92, 112), translatable axialement ou mobile en rotation, relié mécaniquement à chacun des verrous (41, 61, 71, 91, 111) par un organe intermédiaire (43, 73, 93) et/ou un organe de renvoi (44, 63, 74, 94, 113).

2. Dispositif selon la revendication 1, caractérisé en ce que, l'organe de commande (42, 62, 72, 92, 112) est constitué d'une bague (58, 88, 122) ou autre élément similaire, disposée sur ou dans le corps du mandrin (2), mobile suivant l'axe de ce dernier ou susceptible de tourner par rapport à celui-ci et pouvant être bloquée directement, soit au moyen d'axes de blocage (126), de broches d'arrêt, de crantages à bille (90, 90') ou équivalent, soit par l'intermédiaire des organes d'actionnement associés (60) lorsque les verrous (41, 61, 71, 91, 111) sont en prise.

3. Dispositif selon la revendication 1 ou 2, caractérisé en ce que, la liaison mécanique entre l'organe de commande (42, 62, 72, 92, 112) et les verrous (41, 61, 71, 91, 111) est assurée dans les mors (11) par un organe intermédiaire (43, 73, 93) et/ou un organe de renvoi (44, 63, 73, 94, 113) permettant de transformer les déplacements de l'organe de commande (42, 62, 72, 92, 112) en un mouvement d'avance axiale pour la commande des verrous (41, 61, 71, 91, 111).

4. Dispositif selon la revendication 3, caractérisé en ce que, les organes de renvoi (44, 63) sont constitués chacun d'un levier pivotant à deux bras (51, 64) placé dans un évidement (48, 49) pratiqué de préférence au centre des mors (11), lequel s'articule à l'extrémité supérieure (52, 45) soit dans un organe intermédiaire coulissant (43) soit directement dans l'organe de commande (42, 62) translatable axialement et à l'extrémité inférieure (53, 46) dans les verrous (41, 61).

5. Dispositif selon la revendication 3, caractérisé en ce que, les organes de renvoi (44, 74') sont formés de tiges pivotants (79, 79'), logées dans les mors (11) et reliées mécaniquement d'un côté à l'organe de commande lui-même (72, 72') ou aux organes intermédiaires (73) associés translatables axialement à l'intérieur des mors (11) au moyen d'un levier, d'une came ou d'une denture (83) placée sur la partie inférieure ou supérieure, et de l'autre côté, aux verrous via une seconde denture, un levier ou une came placé(e) sur la partie inférieure ou supérieure.

6. Dispositif selon la revendication 3, caractérisé en ce que, les organes de renvoi (94) sont constitués d'axes de réglage (99) translatables radialement à l'intérieur des mors (11) et reliés nécessairement aux faces opposés (101, 103) des organes intermédiaires (93) et des verrous (91) par l'intermédiaire des surfaces obliques (101, 102) usinées de préférence sur leurs faces avant inférieure et supérieure.

7. Dispositif selon la revendication 6, caractérisé en ce que, les surfaces obliques associées (100, 101, 102, 103) des organes intermédiaires (93), de l'axe de réglage (99) et des verrous (91) constituent un assemblage en queue d'aronde.

8. Dispositif selon l'une ou plusieurs des revendications 1 à 3, caractérisé en ce que, les organes intermédiaires (93') situés du côté des mors (11) forment des verrous (91') pouvant venir se loger dans und évidement (36 ou 37) pratiqué dans les mors auxiliaires (31).

9. Dispositiv selon l'une ou plusieurs des revendications 1 à 8, caractérisé en ce que, les organes intermédiaires (43, 73, 93) sont accouplés à l'organe de commande (42, 72, 93) par l'intermédiaire de tiges d'actionnement (45, 75, 95), disposées de préférence au centre des mors (11) et reliées aux organes intermédiaires (43, 73, 93) par un assemblage à translation radiale du type tenon-mortaise (55, 56, 85, 86) p. ex. à la manière d'un assemblage en té.

10. Dispositif selon l'une ou plusieurs des revendications 1 à 10, caractérisé en ce que, l'organe de commande pour l'actionnement des verrous du mandrin (1) est formé d'une bague basculante (106) qui vient prendre appui contre les surfaces convexes (109) des axes d'actionnement (95) ou des organes intermédiaires.

11. Dispositif selon la revendication 3, caractérisé en ce que, les organes de renvoi (113) sont formés de tiges (116) pivotantes logées dans les mors (11) et reliées de façon rigide à l'organe de commande rotatif (112) et aux verrous (111) au moyen de leviers (116), de dentures (117) ou de cames.

## Claims

1. A device for coupling auxiliary jaws (31) to primary jaws (11) slidably mounted in the body of a chuck (1), said primary jaws (11) being positively connectable with said auxiliary jaws by a radial movement and each having an extension (21) projecting in the axial direction of the chuck body (1) and provided with an abutment face and a projection in the form of an engaging lip projecting inwards or outwards perpendicular to the chuck axis, and there being, to receive said extension, (21), a recess (32) formed in the auxiliary jaws, which are non-rotatably received in the chuck body, said recess being provided with an undercut (33) to receive said projection of said extension (21) and having a corresponding surface acting in cooperation with said abutment face of said extension, and there also being, in order to secure the auxiliary jaws, an axially slidable interlock element (41, 61, 71, 91, 111) set into each primary jaw and engageable into a recess formed in the auxiliary jaws, said device being characterised in that in order to operate the interlock elements (41; 61; 71 91; 111) a turnably or axially slidably mounted adjusting element (42; 62; 79; 92; 112) is provided which is positively mechanically connected with the interlock elements (41; 61; 71; 91; 111) via respective intermediate elements (43; 73; 93) and/or via redirecting elements (44; 63; 74; 94; 113).

2. A device according to Claim 1, characterised in that the adjusting element (42; 62; 72; 92; 112) is in the form of a control ring (58; 88; 112) mounted on or in the chuck body (2) and movable in the axial direction thereof or turnable relative thereto, or in the form of a similar component, and is directly, for example by means of securing pins (126), interlocking pins, ball detents (90, 90') or similar, or indirectly, by means of associated actuating elements (60), securable in the position in which the interlock elements (41; 61; 71; 91; 111) are engaged.

3. A device according to Claim 1 or 2 characterised in that in order to positively connect the adjusting element (42; 62; 72; 92; 112) with the interlock elements (41; 61; 71; 91; 111), an intermediate element (43; 73; 93) and/or a redirecting element (44; 63; 73; 94; 113) is received in each primary jaw, by means of which adjusting movements of the adjusting element (42; 62; 72; 92; 112) are convertible into axial advancing movements of the interlock elements (41; 61; 71; 91; 111).

4. A device according to Claim 3, characterised in that the redirecting elements (44; 63) are in the form of two-armed levers (51; 64) each pivotably supported in a preferably centrally arranged recess in the primary jaws, one end (52; 45) of each said lever (51; 64) being, via a movable intermediate element (43) or directly, articulatedly connected with the axially movable adjusting element (42; 62), and the other end (53; 46) thereof being articulatedly connected with the interlock elements (41; 61).

5. A device according to Claim 3, characterised in that the redirecting elements (44; 74') are in the form of pins (79, 79') rotatably mounted in the primary jaws (11) and positively coupled to the adjusting element (72, 72') via teeth formed in their outer or inner portion, via a lever or cam, or directly, and being connected at their inner or outer portion with the interlock elements (71), via other teeth (84), a lever or a cam.

6. A device according to Claim 3, characterised in that the redirecting elements (94) are in the form of movable pins (99) radially slidably received in the primary jaws (11) and positively connected with the intermediate elements (93) and the interlock elements (91) by means of inclined surfaces (101; 102) formed on the movable pins (99), preferably on the inner and outer end faces thereof, and cooperating surfaces (101, 103) provided on the intermediate elements (93) and interlock elements (91).

7. A device according to Claim 6 characterised in that the cooperating inclined surfaces (100, 101, 102, 103) of the intermediate elements (93), movable pins (99) and interlock elements (91) are in the form of interengaging wedge hooks.

8. A device according to one or more of Claims 1 to 3, characterised in that each intermediate element (93'), at its end facing the primary jaws (11), is in the form of an interlock element (91') engageable in a recess (36 or 37) formed in the auxiliary jaws (31).

9. A device according to one or more of Claims 1 to 8, characterised in that in order to couple the intermediate elements (43; 73; 93) with the adjusting element (42; 72; 93), actuating pins (45; 75; 95) are attached to said adjusting element (42; 72; 93), preferably centrally to the primary jaws (11), and are positively coupled to the intermediate elements (43; 73; 93) via a radially slideable slot and key connection (55, 56; 85, 86) e.g. in the form of a hammer-head coupling.

10. A device according to one or more of Claims 1 to 9, characterised in that in order to actuate individual interlock elements of the chuck (1), the adjusting element (72') is in the form of a tiltably mounted ring (106) and is supported on the actuating pins (95) or intermediate elements on convexly curved faces (109) formed thereon.

11. A device according to Claim 3, characterised in that the redirecting elements (113) are in the form of pins (116) rotatably mounted in the primary jaws (11) and are positively coupled with the rotatable adjusting element (112) and with the interlock elements (111) by means of levers (116), teeth (117) or cams.

# FIG. 1

FIG. 2

FIG. 3

FIG. 4

FIG. 5

EP 0 204 095 B1

FIG. 6

96  95  93  101      97  10
                          100
92                        94
                          98
                          24
1   3   2  7  99  102  103  11  91

FIG. 7

1
        95  93'  11  91'  36  21  31
92

3   2   7           35        37

FIG. 8

106  109

108
107        96
104        95
105  3

FIG. 9

FIG. 10